# FASCICULE DE BREVET EUROPEEN

(11) **EP 0 608 647 B1**
(45) Date de publication et mention de la délivrance du brevet: **05.06.1996**
(21) Numéro de dépôt: 93402991.9
(22) Date de dépôt: 13.12.1993
(51) Int. Cl.: B63G 5/00, F16K 24/04, F16K 31/36

(54) **Dispositif de purge d'air dans un recipient soumis à des mouvements incontrôlés**
Entlüftungssystem für ein Behälter, der oscillierenden Bewegungen ausführt
Vent system for a container having oscillating movements

(30) Priorité: 17.12.1992 FR 9215266
(43) Date de publication de la demande: 03.08.1994
(73) Titulaire: ETAT FRANCAIS représenté par le Délégué Général pour l'Armement, F-00460 Armées (FR)
(72) Inventeur: Escarrat, Pierre, F-83100 Toulon (FR)

(56) Documents cités:
- US-A- 1 458 154
- US-A- 2 845 937
- US-A- 2 942 612
- US-A- 3 967 633

## Description

La présente invention concerne les récipients destinés à être remplis d'un liquide, et plus particulièrement un dispositif de purge d'air dans un récipient à fermeture étanche soumis à des mouvements oscillatoires incontrôlés, et destiné à être rempli d'un liquide.

Un récipient de ce type est le tube lance-torpilles situé à bord d'un sous-marin ou de tout autre type de lanceur d'engins. Le tube lance-torpilles est immergé et son fonctionnement nécessite la mise en équipression de l'intérieur du tube avec le milieu ambiant (c'est à dire l'eau) avant la mise en communication avec celui-ci.

Il est donc nécessaire, de purger l'air qui se trouve dans le tube pendant que l'eau remplit le tube grâce à un orifice de remplissage. Pour ce faire, le tube dispose de deux orifices de purge situés aux deux extrémités. Chacun d'un est associé à un circuit dans lequel sont montés en série une vanne d'isolement et un indicateur de présence d'eau. Toute arrivée d'eau détectée par l'indicateur de présence d'eau entraîne la fermeture des vannes d'isolement. Ainsi, normalement, lorsque le tube est rempli d'eau et que les vannes d'isolement ont été fermées, le tube rempli d'eau à la même pression que le milieu environnant (la mer) peut être ouvert à son extrémité de façon à procéder au lancement de la torpille.

Malheureusement, toute variation d'assiette du lanceur due au tangage ou au roulis, entraîne l'inclinaison correspondante du tube. Cette inclinaison est alors susceptible de provoquer une arrivée d'eau accidentelle à l'un ou l'autre des indicateurs de présence d'eau et provoquer la fermeture de la vanne d'isolement ce qui rend aléatoire la purge de l'air en cas de mouvements oscillatoires du lanceur dus au tangage principalement.

Le but de l'invention est donc de réaliser un dispositif de purge d'air ou d'un gaz quelconque pour récipient destiné à être rempli d'eau ou d'un liquide quelconque, qui n'est pas sensible aux mouvements oscillatoires incontrôlés du récipient.

Un autre but de l'invention est de réaliser un dispositif de purge d'air (ou d'un gaz quelconque) pour récipient destiné à être rempli d'eau (ou d'un liquide quelconque) et soumis à des mouvements oscillatoires incontrôlés, qui permet de procéder au remplissage complet du récipient avant que soit stoppée anormalement l'opération de remplissage du récipient.

L'objet de l'invention est donc un dispositif de purge de gaz dans un récipient à fermeture étanche soumis à des mouvements oscillatoires incontrôlés et destiné à être rempli par un liquide, comprenant un orifice de remplissage pour introduire le liquide dans le récipient. Le dispositif selon l'invention consiste en une tubulure ayant une partie intérieure et une partie extérieure au récipient en communication l'une avec l'autre, la partie intérieure étant normalement ouverte pour laisser entrer dans la tubulure le gaz refoulé par le liquide remplissant le récipient, et la partie extérieure comprenant un indicateur de présence de liquide pour détecter l'arrivée du liquide et indiquer ainsi que le récipient est rempli par le liquide, et une vanne d'isolement pour fermer la partie extérieure de la tubulure en réponse à l'indicateur de présence de liquide. La partie de la tubulure intérieure au récipient comprend au moins deux extrémités ouvertes situées à des endroits différents du récipient, au moins une des extrémités étant pourvue d'un clapet de fermeture pour fermer cette extrémité dès que le liquide atteint un niveau prédéterminé inférieur au niveau nécessaire pour que ce dernier pénètre dans la tubulure, de façon à ce que l'extrémité permette l'entrée du gaz même lorsque le récipient est soumis aux mouvements oscillatoires incontrôlés et tant que le récipient n'est pas complètement rempli par le liquide, de sorte que l'indicateur de présence de liquide ne puisse jamais détecter la présence de liquide avant que le récipient ne soit complètement rempli.

Les buts, objets et autres caractéristiques de l'invention seront mieux compris à la lecture de la description qui suit faite en référence aux dessins dans lesquels
la figure 1 représente une vue en coupe d'un tube lance-torpilles muni du dispositif de purge d'air selon le mode de réalisation préféré de l'invention,
la figure 2 illustre en détail le clapet et la tubulure de purge arrière du dispositif de purge d'air selon le mode de réalisation préféré de l'invention,
la figure 3 représente le tube lance-torpilles et son dispositif de purge d'air lorsque l'eau atteint le haut du tube,
la figure 4 représente le tube lance-torpilles à moitié rempli d'eau présentant une assiette négative,
la figure 5 représente le tube lance-torpilles à moitié rempli d'eau présentant une assiette positive,
la figure 6 représente un mode de réalisation du dispositif de l'invention adapté aux mouvements dus au roulis, et
la figure 7 représente un mode de réalisation de l'invention adapté au remplissage d'une cuve à carburant.

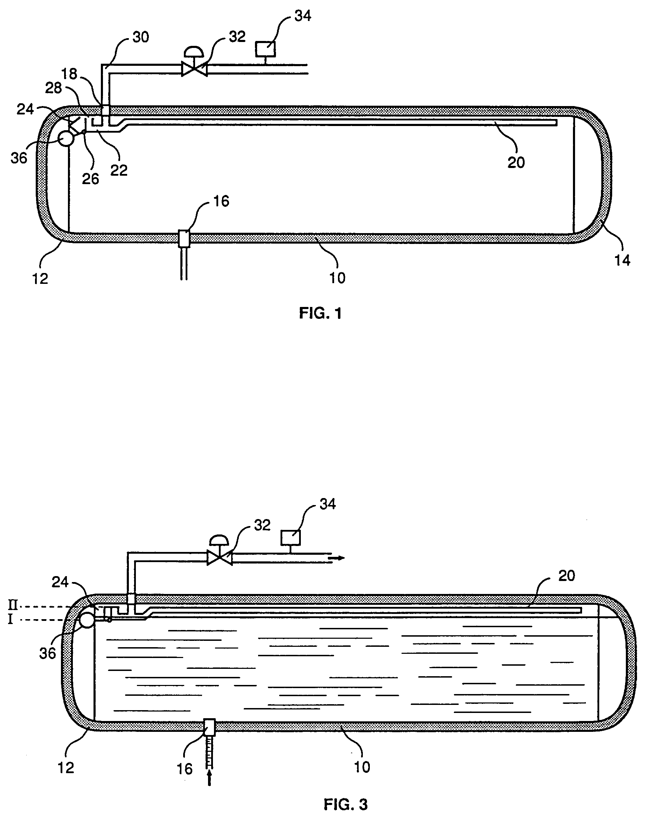

L'invention trouve sa meilleure application dans les tubes lance-torpilles qui équipent les sous-marins ou autres navires de guerre. Un tel tube lance-torpilles est représenté sur la figure 1. Le tube 10 est muni d'une porte arrière 12 qui permet d'introduire la torpille dans le tube et d'une porte avant 14 qui est ouverte pour procéder au lancement de la torpille lorsque le tube est rempli d'eau. Le tube est muni d'un orifice 16 de remplissage d'eau par lequel l'eau entre dans le tube. Il est à noter que l'eau est généralement sous pression et peut provenir, soit du milieu extérieur (la mer), soit d'une source propre au bâtiment, et le remplissage par gravité peut également être envisagé.

Le récipient 10 comporte un dispositif de purge d'air sous forme d'une tubulure traversant la paroi du récipient au manchon de traversée de paroi 18. Cette tubulure comprend une partie intérieure au récipient formée d'une tubulure de purge avant 20 ouverte à son extrémité et d'une tubulure de purge arrière 22. La tubulure de purge arrière comporte un clapet 24 mobile en rotation sur l'articulation 26, ayant pour fonction de fermer l'extrémité ouverte 28 de la tubulure de purge arrière 22 grâce au flotteur 36.

La partie extérieure au récipient 10 du dispositif de purge comprend une tubulure de sortie d'air 30 normalement ouverte à son extrémité sur laquelle sont montés en série une vanne d'isolement 32 et un indicateur de présence d'eau 34. Lorsque l'indicateur de présence d'eau 34 détecte la présence de l'eau, c'est que normalement, le récipient 10 est rempli d'eau. En réponse à la détection d'eau par l'indicateur de présence d'eau 34, une commande hydraulique (non montrée) vient fermer la vanne d'isolement 32 de façon à isoler de l'air le contenu liquide du récipient 10.

Comme le montre la figure 2 illustrant en détail le clapet qui constitue une des caractéristiques essentielles de l'invention, ce dernier est mobile en rotation autour de l'articulation 26 fixée à l'extrémité de la tubulure de purge arrière 22. En l'absence d'eau dans le tube lance-torpilles, le clapet 24 est en position ouverte grâce au poids du flotteur 36 en position basse. Lorsque l'eau monte dans le tube en position horizontale, le flotteur 36 est entraîné vers le haut. Quand l'eau atteint le niveau I, le clapet 24 vient fermer de façon étanche l'extrémité 28 de la tubulure de purge arrière 22. Le niveau I est inférieur au niveau II de l'extrémité 28 de sorte que lorsque l'eau monte, le clapet 24 en position de fermeture étanche empêche l'eau de pénétrer dans la tubulure de purge arrière. Cette différence entre les niveaux I et II est particulièrement utile lorsque le tube lance-torpilles est soumis à une assiette du fait des mouvements oscillatoires incontrôlés, le tangage principalement, comme on va le voir.

La figure 3 illustre le cas où l'eau atteint le haut du tube en position horizontale. Comme il a été dit précédemment, l'eau ayant atteint le niveau I inférieur au niveau II d'ouverture de la tubulure de purge arrière, le clapet 24 ferme l'extrémité de la tubulure de purge arrière grâce au flotteur 36 en position haute, empêchant ainsi l'arrivée d'eau par cette tubulure. La purge de l'air est réalisée par la tubulure de purge avant 20 qui est située dans une position au dessus des niveaux I et II. Lorsqu'elle atteint l'extrémité de la tubulure de purge avant, l'eau pénètre dans la tubulure et est détectée par l'indicateur de présence d'eau 34 qui commande alors la fermeture de la vanne d'isolement.

Lorsque l'assiette du tube lance-torpilles varie pendant le remplissage, la purge de l'air peut être réalisée soit par la tubulure de purge arrière, soit par la tubulure de purge avant.

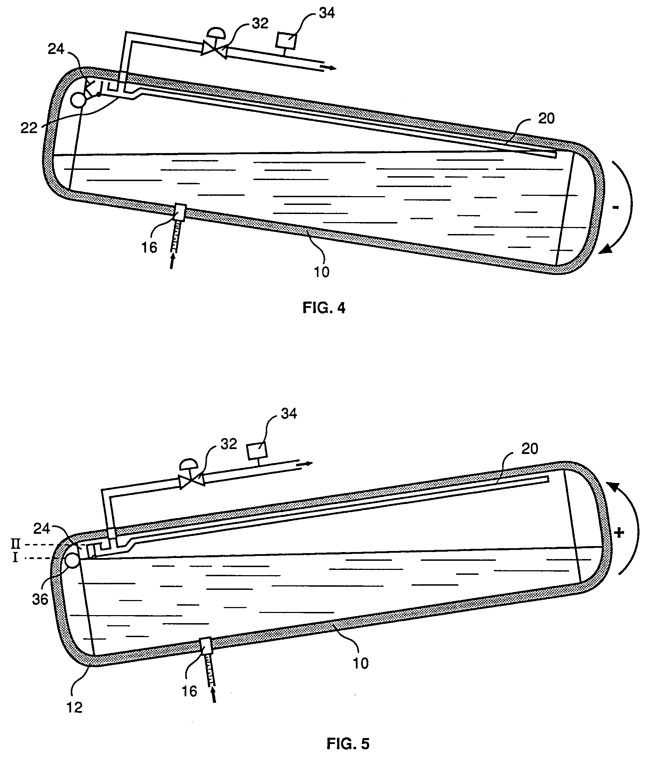

Comme le montre la figure 4, lorsque le tube à moitié rempli présente une assiette négative, l'extrémité de la tubulure de purge avant 20 peut se trouver au dessous du niveau de l'eau. Dans ce cas, la purge de l'air continue à s'effectuer au moyen de la tubulure de purge arrière qui est ouverte du fait que le clapet ne ferme pas l'extrémité de la tubulure.

Par contre, dans le cas d'une assiette positive représentée sur la figure 5, c'est d'abord la tubulure de purge arrière qui se ferme lorsque le clapet 24 ferme l'extrémité de la tubulure du fait que le flotteur 36 est entraîné vers le haut par le niveau de l'eau. Dans ce cas, la purge de l'air s'effectue par la tubulure de purge avant 20.

Il faut noter qu'en fin de remplissage, il peut rester un petit volume d'air soit en avant du tube lance-torpilles soit en arrière de celui-ci, du fait que l'arrivée de l'eau dans la tubulure de purge arrière ou de purge avant en cas d'assiette négative ou positive, se produit avant que l'eau ait chassé entièrement l'air du tube. Cette quantité d'air est infime et n'a aucune conséquence.

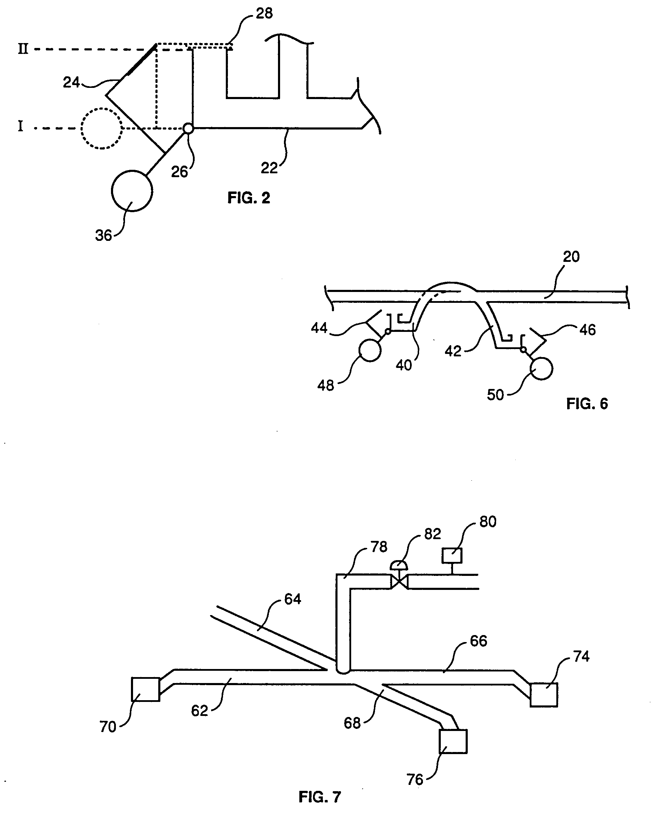

Dans la description qui précède, il n'a été tenu compte que de l'assiette négative ou de l'assiette positive provoquées par les mouvements du tube dus au tangage. Toutefois, il est possible de prévoir une tubulure prenant en compte les mouvements transversaux dûs au roulis. Il suffit de prévoir, comme le montre la figure 6, deux tubulures transversales gauche et droite 40 et 42, courbes pour épouser la forme de la paroi du tube lance-torpilles, venant se raccorder sur la tubulure de purge avant 20. Chacune de ces tubulures transversales est terminée par un clapet 44 ou 46 entraîné chacun en position de fermeture lors de la montée de l'eau par un flotteur 48 ou 50. Ainsi, si le roulis en fin de remplissage, est tellement important que les tubulures de purge avant et de purge arrière se trouvent sous le niveau de l'eau, une des tubulures transversales 40 ou 42 se trouve hors de l'eau, ce qui permet à l'air de continuer d'être évacué du tube.

Bien que le mode de réalisation préféré de l'invention est un tube lance-torpilles dans un sous-marin ou autre navire de surface, l'invention peut être mise en oeuvre dans tous les cas où un récipient (ou cuve quelconque) doit être rempli d'eau en même temps qu'il est purgé de l'air qu'il contient. Ainsi, cette opération est également nécessaire dans un sous-marin ou un navire de surface pour les sas vide-ordures ou les sas pour nageurs de combat. De tels sas peuvent aussi être équipés de dispositifs de purge d'air selon la présente invention.

De même, une opération de purge a lieu lors de remplissage de la soute à carburant d'un navire. Si la soute a une forme cylindrique ou cubique avec une paroi supérieure plate et non plus courbe comme dans le cas du tube lance-torpilles, le dispositif de purge d'air peut être conçu selon la représentation de la figure 7. La partie intérieure de la tubulure comporte 4 branches, dont trois branches 62, 66 et 68 sont terminées chacune à leur extrémité par un clapet, respectivement 70, 74 et 76, identique à celui utilisé dans les figures 1 à 6, et la quatrième branche 64 ne comporte pas de clapet. Lorsque durant le remplissage, la cuve ou la soute à carburant est soumise à des oscillations dans n'importe quelle direction, les clapets des branches qui en sont munies se ferment, empêchant le liquide, dans la majorité des cas, d'être détecté avant le remplissage de la cuve. Seule la branche 64 de la tubulure qui ne possède pas de clapet, peut laisser passer le liquide. Mais du fait que la cuve est généralement aussi ou plus haute que large, le liquide pénétrant dans la tubulure 78 ne peut atteindre l'indicateur de présence de liquide 80 et commander la fermeture de la vanne d'isolement 82 que lorsque la cuve est quasiment remplie, le volume d'air restant étant insignifiant par rapport au volume de la cuve. Il est d'ailleurs possible de réduire ce volume d'air résiduel en prévoyant les trois branches munies de clapet 62, 66 et 68 plus courtes que la branche sans clapet 64. Bien que le dispositif de la figure 7 comporte 4 branches, il est possible d'utiliser 3, 5 ou plus de branches si cela s'avère judicieux.

Comme on vient de le voir, le dispositif selon l'invention peut être utilisé avec des liquides autres que l'eau tels que du carburant. Il peut être également utilisé pour évacuer un gaz autre que l'air. De même, le dispositif peut être employé dans tous les cas où le récipient qui doit être rempli de liquide se trouve soumis à des mouvements oscillatoires incontrôlés. Le récipient pourrait donc se trouver dans tout type de véhicule, que ce soit un véhicule terrestre ou aérien. L'invention ne se limite pas évidemment pas à ces cas, et toutes modifications peuvent être apportées par l'homme du métier pour adapter l'invention à d'autres applications sans sortir du cadre de l'invention.

## Revendications

1. Dispositif de purge de gaz dans un récipient (10) à fermeture étanche soumis à des mouvements oscillatoires incontrôlés et destiné à être rempli par un liquide comprenant un orifice de remplissage (16) pour introduire le liquide dans le récipient, ledit dispositif consistant en une tubulure ayant une partie intérieure et une partie extérieure au récipient en communication l'une avec l'autre, la partie intérieure (20, 22) étant normalement ouverte pour laisser entrer dans la tubulure le gaz refoulé par le liquide remplissant le récipient, et la partie extérieure (30) comprenant un indicateur de présence de liquide (34) pour détecter l'arrivée du liquide et indiquer ainsi que le récipient est rempli par le liquide, et une vanne d'isolement (32) pour fermer ladite partie extérieure de la tubulure en réponse à l'indicateur de présence de liquide;
ledit dispositif étant caractérisé en ce que la partie intérieure au récipient de ladite tubulure comprend au moins deux extrémités ouvertes situées à des endroits différents du récipient, au moins une des extrémités (22) étant pourvue d'un clapet de fermeture (24) pour fermer ladite extrémité dès que le liquide atteint un niveau prédéterminé inférieur au niveau nécessaire pour que ce dernier pénètre dans ladite tubulure, de façon à ce que ladite extrémité permette l'entrée du gaz même lorsque ledit récipient est soumis aux mouvements oscillatoires incontrôlés et tant que ledit récipient n'est pas complètement rempli par le liquide, de sorte que ledit indicateur de présence de liquide ne puisse jamais détecter la présence de liquide avant que ledit récipient ne soit complètement rempli.

2. Dispositif selon la revendication 1 caractérisé en ce que ledit clapet de fermeture (24) est entraîné à la fermeture de l'extrémité de ladite tubulure par un flotteur (36) monté en rotation à l'extrémité de ladite tubulure par une articulation (26).

3. Dispositif selon la revendication 2 caractérisé en ce que la partie intérieure de ladite tubulure a son autre extrémité (20) ouverte sans clapet, le raccordement avec la partie extérieure (30) étant situé à proximité de l'extrémité (22) munie dudit clapet (24) de la partie intérieure de ladite tubulure.

4. Dispositif selon une des revendications 1 à 3 caractérisé en ce que la partie intérieure de ladite tubulure comporte également deux branches transversales (40, 42) munies d'un clapet (44, 46) à leur extrémité, de façon à ce qu'une des extrémités de ladite tubulure soit ouverte et permette l'évacuation du gaz en cas de roulis pouvant submerger les autres extrémités.

5. Dispositif selon une des revendications 1 à 4 caractérisé en ce que ledit récipient est un tube lance-torpilles d'un sous-marin ou tout autre navire, le liquide remplissant le tube étant l'eau extérieure provoquant l'évacuation de l'air du tube.

6. Dispositif selon la revendication 1 ou 2 caractérisé en ce que la partie intérieure de ladite tubulure comporte une pluralité de branches (62, 64, 66, 68), une desdites branches (64) étant ouverte à son extrémité, et chacune des autres branches (62, 66, 68) étant pourvue d'un clapet de fermeture (70, 74, 76).

7. Dispositif selon la revendication 6 caractérisé en ce que ledit récipient dans lequel se trouve la partie intérieure de ladite tubulure est une cuve à carburant d'un navire.

## Claims

1. A gas venting device in a watertight receiver 10 subject to uncontrolled oscillating movements and intended to be filled with a liquid, comprising a filler neck 16 that introduces the liquid into the receiver, the said device consisting of a nozzle with an internal part and an external part connected with one another, the internal part 20, 22 normally being open to let the gas driven back by the liquid filling the receiver to escape, and the external part 30 comprising a device 34 which indicates the presence of liquid and detects the arrival of liquid and indicates that the receiver is filled with liquid, and an isolating valve 32 to close the said external part of the nozzle in response to the indication of the presence of the liquid;
the said device being characterised in that the part of the said nozzle situated inside the receiver comprises at least two open ends located in various places of the receiver, at least one of the extremities 22 being fitted with a closing gate 24 to close the said extremity as soon as the liquid reaches a predetermined level lower than the level required for the latter to enter the said nozzle, so that the said extremity enables the gas to enter even when the said receiver is subject to the uncontrolled oscillating movements and as long as the said receiver is not completely filled with liquid, so that the said liquid indicator may never detect the presence of liquid before the said receiver is completely filled.

2. A device according to claim 1 characterised in that the said closing gate 24 is made to close the extremity of the said nozzle by a rotating float 36 at the end of the said nozzle mounted on hinge 26.

3. A device according to claim 2 characterised in that the other extremity 20 of the internal part of the said nozzle is open without a gate, the connection with the external part 30 being located near extremity 22 fitted with said gate 24 of the internal part of the said nozzle.

4. A device according to one of claims 1 to 3, characterised in that the internal part of the said nozzle also comprises two transverse branches 40, 42 fitted with gate 44, 46 at their extremity, so that one of the extremities of the said nozzle is open and allows the gas to escape in case of a rolling motion which could submerge the other extremities.

5. A device according to one of claims 1 to 4, characterised in that the said receiver is a torpedo launching tube of a submarine or any other ship, the liquid filling the tube being external water which provokes the evacuation of the air in the tube.

6. A device according to claim 1 or 2 characterised in that the internal part of the said nozzle comprises several branches 62, 64, 66, 68, one of the said branches 64 being open at its extremity, and each of the other branches 62, 66, 68 being fitted with a closing gate 70, 74, 76.

7. A device according to claim 6 characterised in that the said receiver in which the internal part of the said nozzle is located is a fuel tank for a ship.

## Patentansprüche

1. Vorrichtung zum Ablassen von Gas in einem Behälter (10) mit dichtem Verschluß, welcher unkontrollierten Schwingungsbewegungen ausgesetzt und dazu bestimmt ist, mit einer Flüssigkeit gefüllt zu werden, ausgestattet mit einer Einlaßöffnung (16) zum Einlassen der Flüssigkeit in den Behälter; diese Vorrichtung besteht aus einem zweiteiligen Rohrstutzen, wobei ein Teil innerhalb und ein Teil außerhalb des Behälters liegt und beide Teile miteinander verbunden sind; der innere Teil (20, 22) ist normalerweise offen, um das von der den Behälter füllenden Flüssigkeit vorgetriebene Gas in den Stutzen eintreten zu lassen, und der äußere Teil (30) ist mit einem Flüssigkeitsfühler (34) versehen, welcher das Einfließen der Flüssigkeit feststellt und meldet, daß der Behälter mit der Flüssigkeit gefüllt ist, und einem Isolierventil (32), um diesen vorerwähnten, außerhalb des Behälters liegenden Teil des Rohrstutzens auf Meldung des Flüssigkeitsfühlers zu schließen.
Diese Vorrichtung ist dadurch gekennzeichnet, daß der innerhalb des Behälters liegende Teil des vorerwähnten Stutzens mindestens zwei offene, an verschiedenen Stellen des Behälters liegende Enden hat, wobei mindestens ein Ende (22) mit einer Abschlußklappe (24) versehen ist, um dieses Ende zu schließen, sobald die Flüssigkeit ein zuvor bestimmtes Niveau erreicht, das niedriger ist als das zum Eindringen der Flüssigkeit in den vorerwähnten Stutzen erforderliche Niveau, so daß dieses Ende den Gaseintritt auch dann ermöglicht, wenn der vorerwähnte Behälter unkontrollierten Schwingungsbewegungen ausgesetzt ist und solange dieser Behälter nicht vollständig mit der Flüssigkeit gefüllt ist, so daß der vorerwähnte Flüssigkeitsfühler die Anwesenheit von Flüssigkeit niemals feststellen kann, bevor der Behälter vollständig gefüllt ist.

2. Vorrichtung gemäß Patentanspruch 1, dadurch gekennzeichnet, daß die vorerwähnte Abschlußklappe (24) das Ende des vorerwähnten Stutzens auf Antrieb durch einen auf einem Drehgelenk (26) am Ende des vorerwähnten Stutzens montierten, rotierenden Schwimmer (36) verschließt.

3. Vorrichtung gemäß Patentanspruch 2, dadurch gekennzeichnet, daß das andere Ende (20) ohne Klappe des inneren Teils des vorerwähnten Stutzens offen ist und der Anschluß mit dem äußeren Teil (30) in Nähe des mit der vorerwähnten Klappe (24) des inneren Teils des Stutzens versehenen Ende (22) liegt.

4. Vorrichtung gemäß einem der Patentansprüche 1 bis 3, dadurch gekennzeichnet, daß der innere Teil des vorerwähnten Stutzens ebenfalls mit zwei Querzweigen (40, 42), an deren Ende je eine Klappe (44, 46) angebracht ist, ausgestattet ist, so daß ein Ende des vorerwähnten Stutzens offen ist und somit das Ablassen des Gases bei Schlingerbewegungen, welche das Uberschwemmen der anderen Enden verursachen, zu ermöglichen.

5. Vorrichtung gemäß einem der Patentansprüche 1 bis 4, dadurch gekennzeichnet, daß es sich bei dem vorerwähnten Behälter um ein Torpedoausstoßrohr eines U-Boots oder eines sonstigen Schiffes handelt und die das Rohr füllende Flüssigkeit das Meerwasser ist, welches den Luftaustritt aus dem Rohr bewirkt.

6. Vorrichtung gemäß Patentanspruch 1 oder 2, dadurch gekennzeichnet, daß der äußere Teil des vorerwähnten Stutzens mehrere Zweige (62, 64, 66, 68) enthält, wobei einer der genannten Zweige (64) an seinem Ende offen ist, und alle anderen Zweige (62, 66, 68) mit je einer Abschlußklappe (70, 74, 76) versehen sind.

7. Vorrichtung gemäß Patentanspruch 6, dadurch gekennzeichnet, daß es sich bei dem vorerwähnten Behälter, in welchem sich der innere Teil des vorerwähnten Stutzens befindet, um einen Brennstofftank eines Schiffes handelt.
